# NEW EUROPEAN PATENT SPECIFICATION

(11) **EP 0 691 792 B2**
(45) Date of publication and mention of the opposition decision: **06.04.2005**
(45) Mention of the grant of the patent: 31.01.2001
(21) Application number: 95110409.0
(22) Date of filing: 04.07.1995
(51) Int. Cl.: H04N 9/83, H04N 9/87, H04N 7/08

(54) **Video signal recording and reproducing apparatus and video signal receiving apparatus capable of detecting kind of video signal**
Fernseh-Signal-Aufzeichnungs- und Wiedergabevorrichtung und Fernseh-Signal-Empfangsvorrichtung geeignet zum Detektieren der Art des Fernseh-Signals
Appareil d'enregistrement et de réception de signal vidéo et appareil de reproduction de signal vidéo capable de détecter le genre de signal vidéo

(30) Priority: 04.07.1994 JP 17479194; 03.02.1995 JP 3932395
(43) Date of publication of application: 10.01.1996
(73) Proprietor: VICTOR COMPANY OF JAPAN, LTD., Yokohama-Shi, Kanagawa-Ken (JP)
(72) Inventor: Yamada, Hiroshi, Shimagawa-ku, Tokyo (JP)
(74) Representative: Wagner, Karl H., Dipl.-Ing.

(56) References cited:
- EP-A- 0 387 517
- EP-A- 0 548 936
- EP-A- 0 558 182
- EP-A- 0 580 367
- EP-A- 0 595 790
- US-A- 5 307 171
- RADIO FERNSEHEN ELEKTRONIK, vol. 41, no. 8, August 1992, BERLIN DE, pages 517-520, XP000306669 "PALplus im Heim."

## Description

### BACKGROUND OF THE INVENTION

### 1. Field of the Invention:

The present invention relates to a video signal recording and reproducing apparatus and a video signal receiving apparatus adaptable to the PALplus system of high definition video signal which is compatible with the existing PAL broadcasting system.

### 2. Description of the Prior Art:

The existing NTSC or PAL broadcasting system broadcasts a video signal with an aspect ratio of 4 : 3. On the other hand, with the recent increase of the size of television receiver (referred to as "TV", hereinafter), a wide-screen broadcasting of such as the High Vision system has been started locally. Aspect ratio of the wide-screen is usually 16 : 9 and there are two 16 : 9 wide-screen systems, the 16 : 9 full mode system and the 16 : 9 letterbox mode system. In the 16 : 9 full mode system, an image having aspect ratio of 16 : 9 is displayed on a TV screen having aspect ratio of 4 : 3 (referred to as "4 : 3 TV", hereinafter) as an image having aspect ratio of 4 : : 3 without any partial omission of the image and, In the 16 : 9 letterbox mode system, an image having aspect ratio of 16 : 9 is displayed on a 4 : 3 TV screen as an image having aspect ratio of 16 : 9 with an upper and lower portions of the screen being out of active image areas. The letterbox mode system includes the so-called EDTV system.

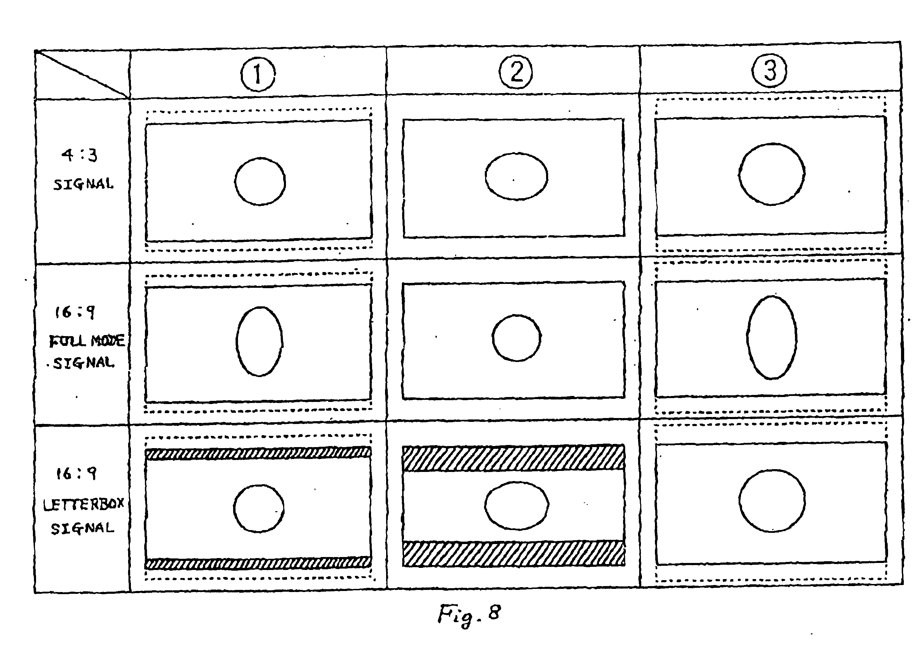

Fig. 7 shows cases where a signal of aspect ratio of 4 : 3 (referred to as "4 : 3 mode signal", hereinafter), a 16 : 9 full mode signal or a 16 : 9 letterbox mode signal is displayed on a 4 : 3 TV or a TV screen having aspect ratio of 16 : 9 (referred to as "16 : 9 TV", hereinafter).

When a 4 : 3 mode signal corresponding to an image including a true circle image in a center portion thereof is displayed on a 4 : 3 TV, there is no omission of the image and the true circle image is displayed in the center portion of the TV screen. When the same 4 : 3 mode signal is displayed on a 16 : 9 TV, there are out-of-active image areas in a right and left side portions of the screen, although the true circle image is displayed.

On the other hand, when a 16 : 9 full mode signal corresponding to an image including a true circle in a center portion thereof is displayed on a 16 : 9 TV, the true circle is displayed on the 16 : 9 TV screen without partial omission of the image. However, when this full mode signal is displayed on a 4 : 3 TV, the circle in the center portion is deformed although there is no partial omission of the image.

Further, when a 16 : 9 letterbox mode signal corresponding to an image including a true circle in a center portion thereof is displayed on a 16 : 9 TV, the true circle is displayed without partial omission of the image. However, when this letterbox mode signal is displayed on a 4 : 3 TV, there are out-of-active image areas in an upper and lower portions of the screen although the true circle is displayed in the center portion of the screen.

Therefore, in order to display an image naturally in visual sense on, particularly, a 16 : 9 TV, the scan size is usually changed. The change of scan size is performed by any of the following three methods:
(1) Right and left end areas of a screen for a 4 : 3 signal are expanded compared with a center portion of the screen to modify its aspect ratio to 16 : 9 and displayed on a 16 : 9 TV. In this case, the larger the degree of expansion of the screen area is the larger the distance from the center of the screen, with or without increasing the changing rate of deformation with an increase of the horizontal distance from the center portion of the screen.
(2) A 16 : 9 full mode signal is displayed on a 16 : 9 TV
(3) A 16 : 9 letterbox mode signal is displayed on a 16 : 9 TV.

Fig. 8 shows cases where a 4 : 3 signal, a 16 : 9 full mode signal and a 16 : 9 letterbox mode signal are displayed on a 16 : 9 TV with respective scan sizes.

In order to change the scan size such that optimal scan sizes corresponding to the respective signals in the 16 : 9 TV are selected, the 4 : 3 signal, the 16 : 9 full mode signal and 16 : 9 letterbox mode signal must be displayed by the methods (1), (2) and (3), respectively.

However, the selection of the scan size when these signals are input through an external terminal to the 16 : 9 TV has been performed by an operator manually, which is troublesome.

The present inventors have proposed, in U.S. Patent No. 5,262,859 and European Patent EP-A-0548936, a magnetic recording and reproducing apparatus for recording on and reproducing from a recording medium an input video signal having different aspect ratios including an aspect ratio of 4 : 3, a letterbox mode signal aspect ratio of 16 : 9 or a full mode signal aspect ratio of 16 : 9, said reproduced video signal being intended to be supplied to a television receiver able to discriminate between said different aspect ratios. These known apparatuses are described in the preambles of claims 1 and 2 and are able to automatically select the scan size.

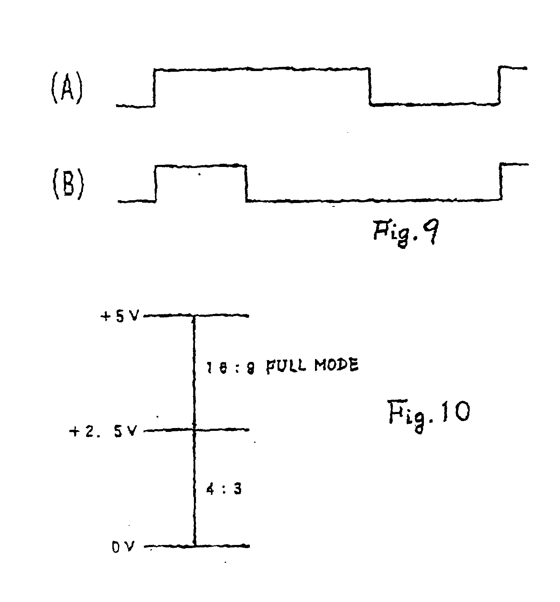

In the magnetic recording and reproducing apparatus according to EP-A-0548936, a control signal indicative of the kind of input signal is recorded on a control track formed longitudinally of a magnetic tape such that the duty cycle of the control signal depends on the kind of input signal. That is, assuming in Fig. 9 that a signal whose high level period is long, is "L" as shown by (A) and a signal whose low level period is long is "S" as shown by (B), the control signal LLSS is recorded for the 16 : 9 full mode signal and LLLS is recorded for the 16 : 9 letterbox mode signal. Further, as the control signal for preventing the reverse tracking of such as compact cassette, LSLS is also recorded. In reproducing, a high level signal and a low level signal corresponding to combinations of L's and S's are produced by discriminating the duty cycle of this control signal. These high and low level signals are superposed on a color signal and a resultant signal sent to the 16 : 9 TV.

On the other hand, in the magnetic recording and reproducing apparatus according to U.S. Patent No. 5,262,859, a 4 : 3 signal is discriminated from a 16 : 9 signal by using a superposition of a d.c. voltage on a color signal at an S terminal used between video devices. As shown in Fig. 10, the d.c. voltage from 5V to 2.5V is assigned to the 16 : 9 full mode signal and the d.c. voltage below 2.5V is assigned to the 4 : 3 signal. The existing 16 : 9 TV corresponds to this scheme.

This 16 : 9 TV automatically changes its scan size correspondingly to the 4 : 3 signal and the 16 : 9 full mode signal, respectively. However, it does not automatically change the scan size correspondingly to the 16 : 9 letterbox mode signal. It is expected that a future 16 : 9 TV has to have a function of automatically changing the scan size correspondingly to the 16 : 9 letterbox mode signal.

### BRIEF SUMMARY OF THE INVENTION

### 1. Object of the Invention

A first object of the present invention is to provide a recording and/or reproducing apparatus capable of recording and/or reproducing an information for discriminating the kind of signal among the 4 : 3 signal, the 16 : 9 full mode signal and the 16 : 9 letterbox mode signal in a specific manner. A second object of the present invention is to provide a digital video signal receiving apparatus capable of outputting said information in an analog form.

### 2. Brief Summary

In order to achieve the above objects, the present invention superposes a discrimination information for discriminating the kind of signal between a 4 : 3 signal, a 16 : 9 full mode signal and a 16 : 9 letterbox mode signal on a color signal by automatically changing the aspect ratio of the reproduced or received signal when discriminating the kind of the reproduced or received signal.

A first aspect of the present invention is reflected by present claim 1.

A second aspect of the present invention is reflected by present claim 2,

A third aspect of the present invention is reflected by present claim 3.

The above features of the present invention will be more apparent from a reading of the following description of the disclosure found in the accompanying drawings and the novelty thereof pointed out in the appended claims.

### BRIEF DESCRIPTION OF THE DRAWINGS

Fig. 1 is a block diagram showing a recording system of a magnetic recording and reproducing apparatus according to a first embodiment of the present invention;
Fig. 2 is a block diagram showing a reproducing system of the magnetic recording and reproducing apparatus according to a first embodiment of the present invention;
Fig. 3 shows d.c. voltages to be superposed on a color signal;
Fig. 4 is a block diagram of a main portion of a 16 : 9 TV used in the first embodiment of the present invention;
Fig. 5 is a block diagram showing a reproducing system of a magnetic recording and reproducing apparatus according to a comparative example;
Fig. 6 is a block diagram of a main portion of a 16 : 9 TV used in the comparative example;
Fig. 7 illustrates cases where a 4 : 3 signal, a 16 : 9 full mode signal and a 16 : 9 letter box mode signal are displayed on a 4 : 3 TV and a 16 : 9 TV, respectively;
Fig. 8 illustrates cases where a 4 : 3 signal, a 16 : 9 full mode signal and a 16 : 9 letterbox mode signal are displayed on a 16 : 9 TV with respective scan sizes;
Fig. 9 shows waveforms for explaining the duty cycle of a control signal;
Fig. 10 shows conventional d.c. voltages to be superposed on a color signal; and
Fig. 11 is a block diagram for explaining a video signal receiving apparatus according to a second embodiment of the present invention.

### DETAILED DESCRIPTION OF THE INVENTION

Preferred embodiments of the present invention will be described with reference to the accompanying drawings.

### [FIRST EMBODIMENT]

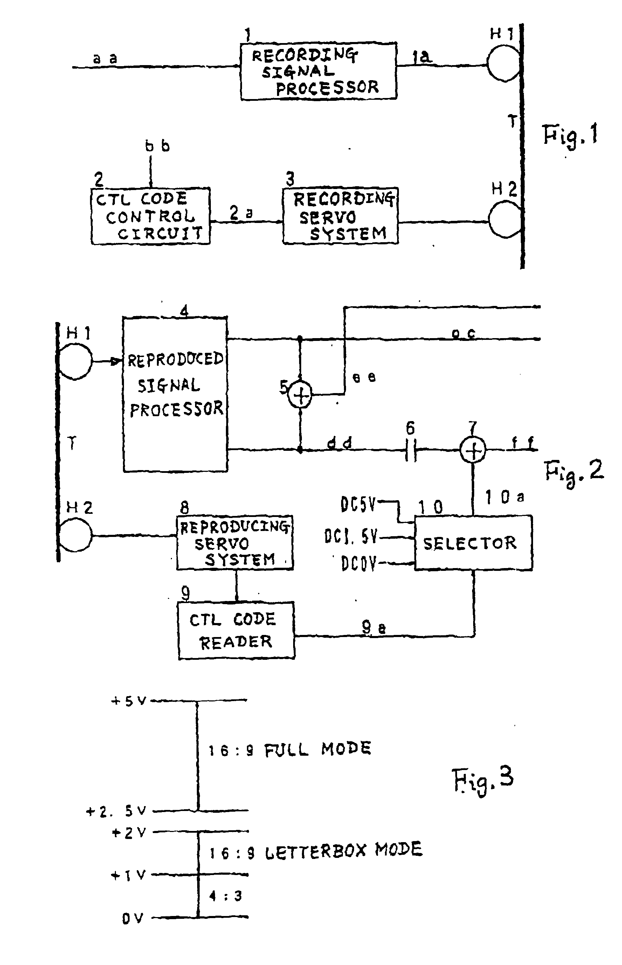

Fig. 1 is a block diagram showing a recording system of a magnetic recording and reproducing apparatus according to a first embodiment of the present invention. An input video signal aa supplied from a transmission line (not shown) is supplied to a recording signal processor 1. In the recording signal processor 1, the input video signal is processed to produce a recording video signal 1a. The recording signal processing is well known, by which the input video signal aa is separated to a luminance signal and a color signal. The separated luminance signal is emphasized and then FM modulated through a limiter. On the other hand, the frequency band of the color signal is converted to a low frequency band. The FM modulated luminance signal and the frequency converted color signal are frequency-multiplexed, resulting in the recording video signal 1a. The recording video signal 1a is recorded on video tracks formed on a magnetic tape T obliquely with respect to a longitudinal direction of the tape through a video head H1 arranged on a rotary drum.

An identification signal bb indicative of the kind of the input video signal aa is supplied to a CTL code control circuit 2. The CTL code control circuit 2 produces a control signal 2a. The duty cycle of the control signal 2a is variable according to the identification signal bb. For example, the duty cycle of the control signal 2a may be LLSS for the 16 : 9 full mode signal and LLLS for the 16 : 9 letterbox mode signal. When the control signal 2a has other duty cycle than LLSS, LLLS or has no special duty cycle, it may represent the 4 : 3 signal. The control signal 2a is supplied to a recording servo system 3 in which it is used to control a capstan motor, etc., and recorded on a control track of the magnetic tape T through a control head H2.

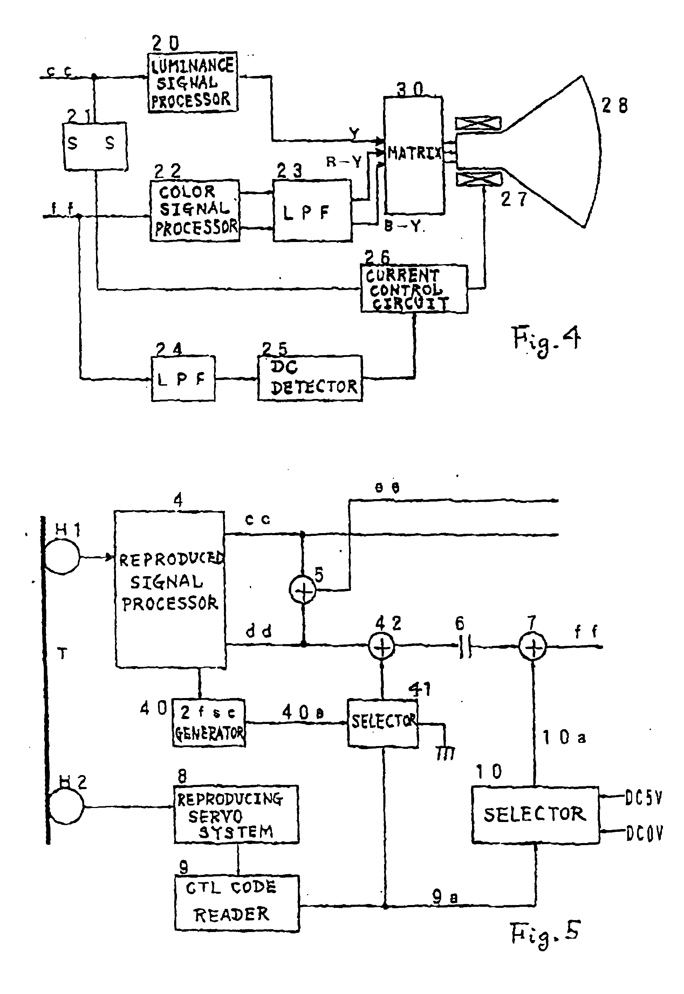

Fig. 2 is a block diagram showing a reproducing system of the magnetic recording and reproducing apparatus according to the first embodiment of the present invention, in which the same constructive components as those shown in Fig. 1 are depicted by the same reference numerals, respectively. A signal reproduced from the magnetic tape T through the video head H1 is supplied to a reproduced signal processor 4. The reproduced signal processor 4 separates a frequency of the reproduced signal to obtain a high frequency signal and a low frequency signal, FM-demodulates the high frequency signal, de-emphsizes the FM-demodulated signal and produces a reproduced luminance signal cc. The reproduced signal processor 4 converts the frequency band of the low frequency signal to a high frequency band to produce a reproduced color signal dd.

The reproduced luminance signal cc and the reproduced color signal dd are added to each other by an adder 5 and a resultant reproduced video signal ee is supplied to a transmission line (not shown). In order to prevent the adverse effect of signal multiplexing, the reproduced luminance signal cc and the reproduced color signal dd of the reproduced video signal are output as they are. In this case, as the discrimination information for the color signal dd, a d.c. voltage is superposed thereon.

The control signal recorded on the control tracks of the magnetic tape T is reproduced through the control head H2 and supplied to a reproducing servo system 8. The reproducing servo system 8 controls the operation of the capstan motor by using a certain rise edge of the control signal regardless of its duty cycle and is wave-shaped and supplied to a CTL code reader 9.

The CTL code reader 9 detects the duty cycle of the control signal and produces an identification signal 9a indicative of the kind of recording signal on the basis of the detected duty cycle. The identification signal 9a is supplied to a selector 10 which selects the d.c. voltage to be overlapped with the reproduced color signal dd according to the identification signal 9a. That is, as shown in Fig. 3, when the identification signal 9a indicates the 16 : 9 full mode signal, a voltage from 2.5V to 5V is selected. Similarly, when the identification signal 9a indicates the 16 : 9 letterbox mode signal, a voltage from 1 V to 2V is selected and, when the identification signal 9a indicates the 4 : 3 signal, a voltage from OV to 1V is selected. In this embodiment, voltages of 5V, 1.5V and OV are used for the respective 16 : 9 full mode, 16 : 9 letterbox mode and 4 : 3 signals.

The d.c. voltage IOa selected is supplied to the adder 7 as the discrimination information and the reproduced color signal dd is supplied to the adder 7 through a capacitor 6. The adder 7 overlaps the d.c. voltage lOa on the reproduced color signal dd and a reproduced color signal ff is ultimately output to the transmission line which is not shown.

It is assumed here that, when the identification signal 9a indicates the 16 : 9 letterbox mode signal, a d. c. voltage from 2.5V to 3.5V is superposed on the reproduced color signal dd and, when the identification 9a indicates the 16 : 9 full mode signal, a d.c. voltage from 3.5V to 5V is superposed on the reproduced color signal dd and that these superposed signals are reproduced by the conventional 16 : 9 TV. In such case, since the conventional TV automatically changes the scan size of the input signal as the 16 : 9 full mode signal even if the input signal is 16 : 9 letterbox mode signal, the 16 : 9 letterbox mode signal having the scan size ② shown in Fig. 8 is obtained. That is, the circle in the center portion of the screen is deformed and the upper and lower portions of the screen become out-of-active areas.

However, as mentioned previously, when the identification signal 9a indicates the letterbox mode signal, that is, the identification signal 9a of 1 V to 2V is superposed as discrimination information on the reproduced color signal dd, the identification signal of 2.5V or less is identified as the 4 : 3 signal in the conventional 16 : 9 TV. Therefore, in the conventional 16 : 9 TV, it becomes 16 : 9 letterbox mode signal having scan size ① shown in Fig. 8 and the upper and lower portions of the screen become out-of-active areas. However, the areas are small compared with the scan size ② and the central circle is a true circle as shown in Fig. 8. When the same signal is displayed on the 16 : 9 TV corresponding to the 16 : 9 letterbox signal, the scan size ③ which is the optimal is automatically selected.

The 16 : 9 TV will be described with reference to Fig. 4. In Fig. 4, the reproduced luminance signal cc is supplied through a transmission line which is not shown to a luminance signal processor 20. A Y signal obtained by processing the luminance signal cc in the known manner by the luminance signal processor 20 is supplied to a matrix circuit 30. A sync signal separated by a sync separator 21 is supplied to a current control circuit 26. On the other hand, the reproduced color signal ff is decoded by a color signal processor 22 to obtain a R-Y signal and a B-Y signal which are supplied through a low pass filter 23 to the matrix circuit 30. The matrix circuit 30 produces R, G and B signals from the R-Y and B-Y signals and supplies them to a cathode ray tube 28.

After an a.c. component of the reproduced color signal ff is removed by a low pass filter 24, the identification information overlapped on the reproduced color signal ff is detected by a DC detector 25 and supplied to the current control circuit 26. The current control circuit 26 controls deflection currents of deflection coils 27 of the cathode ray tube 28 on the basis of the identification information for automatically selecting the scan size. In this case, the DC detector 25 identifies the identification signal of 2.5V to 5V as the 16 : 9 full mode signal, of 1V to 2V as the 16 : 9 letterbox mode signal and of OV to 1 V as the 4 : 3 signal and automatically selects optimal scan size according thereto.

In the first embodiment, in order to automatically change the scan size of the 16 : 9 letterbox mode signal correspondingly to the conventional 16 : 9 TV, the d.c. voltage corresponding to the 16 : 9 letterbox mode signal is set in the d.c. voltage range which is conventionally identified as the 4:3 signal. On the contrary, a comparative example is featured by superposing 2 fsc on the reproduced color signal in transmitting the 16 : 9 letterbox mode signal and the d.c. voltage to be superposed on the color signal is set in a d.c. voltage range which is conventionally identified as the 4 : 3 signal.

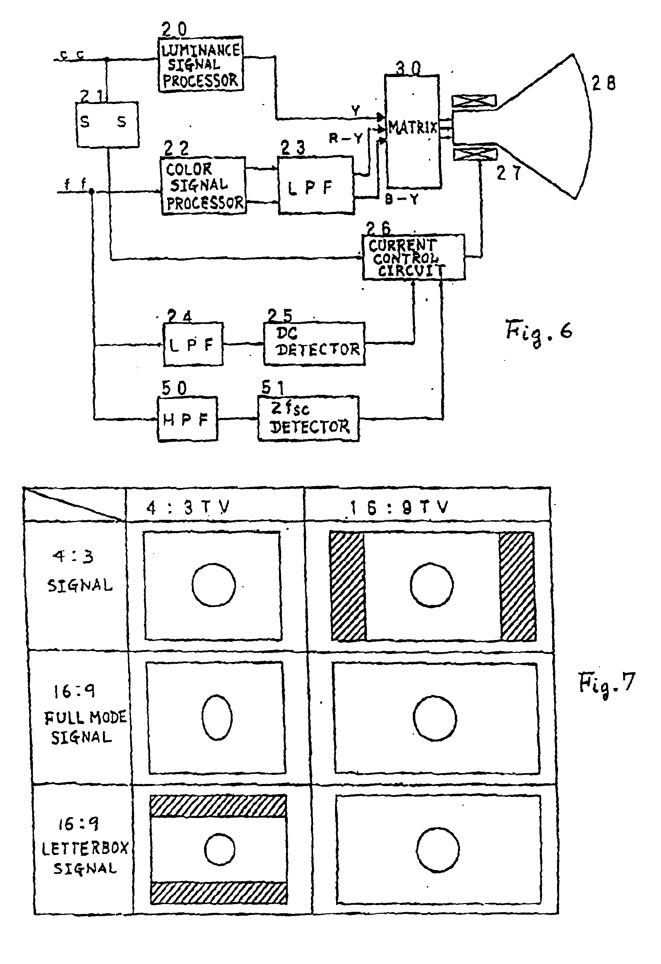

The magnetic recording and reproducing apparatus according to the second invention will be described with reference to Fig. 5 in which the same components as those shown in Fig. 2 are depicted by the same reference numerals, respectively, without detailed description thereof. The comparative example shown in Fig. 5 differs from the first embodiment shown in Fig. 2 in that a 2 fsc generator 40 and a selector 41 are further included and that the number of the d.c. voltage ranges to be selected by a selector 10 is reduced to two. These differences of the comparative example from the first embodiment will be described.

A sub-carrier signal having a single sub-carrier frequency is supplied from a reproduced signal processor 4 to the 2 fsc generator 40. In this case, the sub-carrier signal may be that used when a frequency range of a color signal is converted to a high frequency range.

A signal 40a obtained by doubling the sub-carrier frequency by the 2 fsc generator 40 is supplied to the selector 41. The selector 41 which is under control of the identification signal 9a selects the signal 40a only when the identification signal 9a indicates the 16 : 9 letterbox mode signal and supplies the signal 40a to an adder 42.

On the other hand, when the identification signal 9a indicates the 4 : 3 signal or the 16 : 9 full mode signal, the selector 41 selects the ground level (OV). Therefore, the 2 fsc is overlapped on the reproduced color signal dd only when the identification signal 9a indicates the 16 : 9 letterbox mode signal and a resultant signal is supplied to an adder 7 through a capacitor 6.

The selector 10 selects 5V when the identification signal 9a indicates the 16 : 9 full mode signal and selects OV when the identification signal 9a indicates the 16 : 9 letterbox mode signal or the 4 : 3 signal. An output d.c. voltage 10a which is either 5V or 0V thus selected by the selector 10 is supplied to the adder 7.

Therefore, the reproduced color signal ff finally obtained contains 0V and the 2 fsc component when the input signal is the 16 : 9 letterbox mode signal and contains only 5V when the input signal is the 16 : 9 full mode signal. When the input signal is the 4 : 3 signal, only 0V is superposed on the reproduced color signal. That is, by superposing the 2 fsc component on the color signal of the 16 : 9 letterbox mode signal, the latter can be discriminated from the 16 : 9 full mode signal as well as the 4 : 3 signal.

When the reproduced luminance signal and the reproduced color signal thus obtained are supplied to the conventional 16 : 9 TV, the scan size thereof becomes size ① shown in Fig. 8 as mentioned in the first embodiment. With the scan size ①, the upper and lower out-of-active areas become smaller than those with the scan size ②, while the center circle is maintained true.

The 2 fsc component superposed on the reproduced color signal is converted to 1 fsc (= 2 fsc - 1 fsc) when the reproduced color signal is decoded. The 1 fsc component can be sufficiently attenuated by the low-pass filter having a cutoff frequency of about 1.5 MHz or lower, resulting no problem.

A 16 : 9 TV which is used with the magnetic recording and reproducing apparatus of the comparative example will be described with reference to Fig. 6 in which the same components as those shown in Fig. 4 are depicted by the same reference numerals, respectively, without detailed description thereof. The 16 : 9 TV shown in Fig. 6 differs from that shown in Fig. 4 in that a high-pass filter 50 and a 2 fsc detector 51 are further included. This difference will be described.

In Fig. 6, the reproduced color signal ff is supplied to the 2 fse detector 51 through the high-pass filter 50. The 2 fsc component superposed on the reproduced color signal and detected by the 2 fsc detector 51 is supplied to a current control circuit 26. When the 2 fsc detector 51 detects the 2 fsc component superposed on the reproduced color signal ff, the current control circuit 26 automatically selects the scan size ②. On the other hand, when the 2 fsc detector 51 does not detect the 2 fsc component and a voltage detected by a DC detector 25 is 2.5 V or lower, the current control circuit 26 selects the scan size ①. Further, when a voltage detected by the DC detector 25 is in a range from 2.5 V to 5V, the current control circuit 26 selects the scan size ②.

In this manner, the optimal scan size for each of the input signals is automatically selected.

### [SECOND EMBODIMENT]

Although the magnetic video signal recording and reproducing apparatus and the magnetic video signal reproducing apparatus have been described as the first embodiment, a video signal receiving apparatus for selectively receiving the 4 : 3 signal, the 16 : 9 full mode signal or the 16 : 9 letterbox signal broadcast as a digital signal will be described as a second embodiment.

For example, when the 4 : 3 signal, the 16 : 9 full mode signal or the 16 : 9 letterbox signal is broadcast as the digital broadcasting signal, the previously mentioned identification information can not be superposed on the digital signal on the broadcasting side since the identification information is an analog signal. That is, in a receiving device which receives the digital broadcasting signal and outputs a digital video signal or an analog video signal after digital to analog conversion, it is impossible to superpose a d.c. voltage corrersponding to the digital signal on a color signal at, for example, an S terminal on an output side of the receiving device.

Therefore, when the digital broadcasting signal is to be output by the video signal receiving device for receiving the digital broadcasting signal as a current analog video signal, the identification information is superposed on a color signal constituting the analog video signal, such that the video signal receiving device becomes compatible with the magnetic video signal recording and reproducing apparatus and the magnetic video signal reproducing apparatus, mentioned previously.

Incidentally, among digital broadcastings which have been planned as to be implemented in the future, the so-called MPEG (Moving Picture Image Coding Experts Group) system broadcasts an image data coded by an image information compression. The image data of the MPEG system is hierarchically constructed with a picture layer corresponding to the video information, a sequence layer containing the kind of the video information and sync code, etc., and a block layer containing other information, etc. Particularly, it is possible to provide a user data in a specific bit area in the sequence layer.

For example, when the video signal is broadcast digitally by this MPEG system, it is possible to discriminate the video signal received by a video signal receiving device of the MPEG system by setting the identification information in the bit area.

That is, by setting the identification information indicative of the 4 : 3 signal in, for example, a 2-bit area as (0,0), that indicative of the 16 : 9 full mode signal as (1.0), that indicative of the 16 : 9 letterbox signal as (0.1) and non-defined information as (1, 1 ), it is possible to determine whether the received video signal is the 4 : 3 signal, the 16 : 9 full mode signal, the 16 : 9 letterbox signal or other signal.

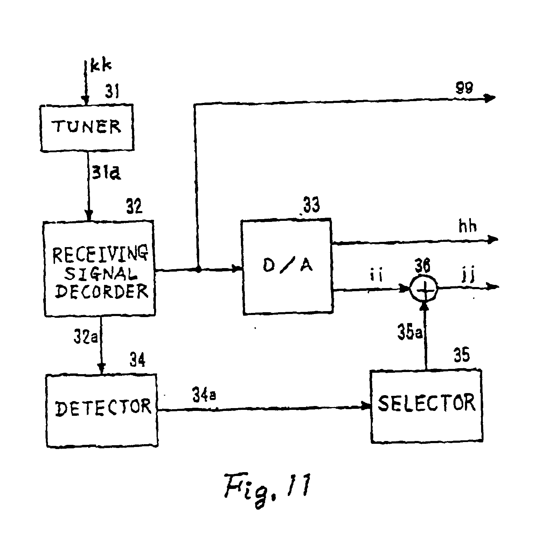

The video signal receiving apparatus according to the second embodiment will be described with reference to Fig. 11. In Fig. 11, a tuner 31 receives an RF signal kk broadcast at a channel frequency corresponding to a channel number assigned by a user through an input means which is not shown. The RF signal kk received by the tuner 31 is supplied to a receiving signal decoder 32 as a received signal 31a.

The receiving signal decoder 32 decodes a digital video signal and the identification information from the received signal 31a. The decoded digital video signal gg is supplied to a transmission line which is not shown and a D/A converter 33 as a digital output. On the other hand, the receiving signal decoder 32 supplies the information set in the bit area provided in the sequence layer and contained in the image data of the decoded digital video signal to a detector 34 as an information signal 32a.

The detector 34 detects the kind of the supplied information signal 32a on the basis of the 2-bit information set in the bit area and supplies a result of detection to a selector 3S as an identification information signal 34a.

The selector 35 may be substantially the same as the selector 10 mentioned previously and selects, on the basis of the identification signal 34a, a d.c. voltage corresponding to the 4 : 3 signal, the 16 : 9 full mode signal or the 16 : 9 letterbox signal and supplies the d. c. voltage, (for example, shown in Fig. 3) to an adder 36 as a discrimination information signal 35a.

The D/A converter 33 converts th e digital video signal gg into an analog video signal and separates and outputs a luminance signal hh and a color signal ii constituting the analog video signal. The color signal ii is supplied to the adder 36 in which it is added to the d.c. voltage from the selector 35.

Thus, a color signal jj from the adder 36 which is the color signal ii superposed with the d.c. voltage signal 35a as the discrimination signal for discriminating among the 4 : 3 signal, the 16 : 9 full mode signal and the 16 : 9 letterbox signal is output to the transmission line which is not shown. For example, when the luminance signal hh and the color signal jj are supplied to, for example, the luminance signal processor 20 and the sync separator 21 and the color signal processor 22 and the low-pass filter 24 or the high-pass filter 50, it is possible to automatically select the optimum scan size of any of the 4 : 3 signal, the 16 : 9 full mode signal and the 16 : 9 letterbox signal contained in the broadcasting signal and display it.

### [Modification 1]

Although, in the first and second embodiments, the present invention has been described as applied to a magnetic recording and reproducing apparatus for a video signal , the present invention can be applied to other recording and reproducing apparatuses whose function is to record and reproduce a video signal, as well.

### [Modification 2]

Although, in the first and second embodiments. the present invention has been described as applied to a magnetic recording and reproducing apparatus for a video signal, the present invention can be applied to another reproducing apparatus whose function is to only reproduce a video signal, as well.

### [Modification 3]

In the first embodiment, the d.c. voltage of 1 V to 2V is overlapped on the reproduced color signal dd as the discrimination information signal when the identification signal 9a indicates the 16 : 9 letterbox signal. However, it is of course possible to use a d.c. voltage of, for example, OV or lower as the discrimination information signal instead of the d.c. voltage of 1 V to 2V, so long as that d.c. voltage value is discriminable from that for the 4 : 3 signal and from that for the 16 : 9 full mode signal.

### (Modification 4]

Although, in the second embodiment, the receiving signal decoder 32 has been described so as to decode the identification information from the receiving signal, it is of course possible to construct the receiving signal decoder 32 and the detector 34 such that the decoder 32 supplies the digital video signal gg obtained by decoding the receiving signal to the detector 34 and the detector 34 detects the information in the bit area provided in the sequence layer contained in the digital video signal gg as the identification information signal.

## Claims

1. A video signal recording and reproducing apparatus for use in combination with a 16 : 9 television receiver having an aspect ratio of 16 : 9, said video signal recording and reproducing apparatus for recording on and reproducing from a recording medium (T) an input video signal having different modes including a 4 : 3 mode signal having an aspect ratio of 4 : 3, a 16 : 9 letterbox mode signal , or a 16 : 9 full mode signal having an aspect ratio of 16 : 9, said reproduced video signal being intended to be supplied to said 16 : 9 television receiver, wherein said 16 : 9 television receiver has a function of automatically changing the scan size correspondingly to said input video signal being the 4 : 3 mode signal and the 16 : 9 full mode signal, respectively, said apparatus comprising:
• a code control circuit (2) for recording an identification information (2a, 9a) indicative of the mode of input video signal respectively on the recording medium (T);
• a recording signal processor (1) for recording the input video signal (aa) on the recording medium (T);
• a reproducing signal processor (4) for producing, from the signal reproduced from the recording medium (T), a luminance signal (cc) and a color signal (dd);
• a code control reader means (8, 9) for reproducing the identification information (9a) from the recording medium (T); and for superposing a discrimination information (lOa) upon the reproduced color signal (dd), said code control reader means (8, 9) having a selector (10) outputting said discrimination information (lOa) corresponding to said reproduced identification information, wherein said discrimination information is a d.c. voltage, and a d.c. voltage of a first range is assigned to the 16 : 9 full mode signal and a d.c. voltage of a second range below the first range is assigned to the 4 : 3 mode signal,
**characterized in that**
said selector (10) is arranged and provided such that the range of voltage of discrimination information representing a 16 : 9 letterbox mode signal is assigned to the second range, and wherein the second range is divided into two subranges, one of the subranges being assigned to the 4 : 3 mode signal, and the other of the subranges being assigned to the 16 : 9 letterbox mode signal, wherein the discrimination information representing a 16 : 9 letterbox mode signal is discriminated by said television receiver as a 4 : 3 mode signal having an aspect ratio of 4 : 3.

2. A reproducing apparatus for use in combination with a 16 : 9 television receiver apparatus having an aspect ratio of 16 : 9, said reproducing apparatus for reproducing a video signal having different modes including a 4 : 3 mode signal having an aspect ratio of 4 : 3, a 16 : 9 letterbox mode signal , or a 16 : 9 full mode signal having an aspect ratio of 16 : 9, and an identification information (2a, 9a) indicative of the mode of the video signal recorded on a recording medium (T), said reproduced video signal being intended to be supplied to said 16 : 9 television receiver, which has a function of automatically changing the scan size correspondingly to said input video signal being the 4 : 3 mode signal and the 16 : 9 full mode signal, respectively, said apparatus comprising:
• a reproducing signal processing means (4) for producing, from said signal reproduced from the recording medium (T), a luminance signal (cc) and a color signal (dd);
• means (8, 9) for reproducing the identification information from the recording medium (T); and
• means (7, 10, 41 & 42) for superposing a discrimination information (10a) produced on the basis of said reproduced identification information (2a, 9a) on the reproduced color signal (dd) and outputting the superposed signal (ff), said superposing means (7, 10, 41 & 42) having a selector (10) outputting said discrimination information (10a)wherein said discrimination information is a d.c. voltage, and a d.c. voltage of a first range is assigned to the 16 : 9 full mode signal and a d.c. voltage of a second range below the first range is assigned to the 4 : 3 mode signal,
**characterized in that**
said selector (10) is arranged and provided such that the range of voltage of discrimination information representing a 16 : 9 letterbox mode signal is assigned to the second range, and wherein the second range is divided into two subranges, one of the subranges being assigned to the 4 : 3 mode signal, and the other of the subranges being assigned to the 16 : 9 letterbox mode signal, said discrimination information (10a) outputted by said selector (10) and representing a 16 : 9 letterbox mode signal is discriminated by said television receiver as a 4 : 3 mode signal having an aspect ratio of 4 : 3.

3. A video signal receiving apparatus for use in combination with a 16 : 9 television receiver having an aspect ratio of 16: 9, said video signal receiving apparatus for receiving a digitally transmitted video signal (kk) having different modes including a 4 : 3 mode signal having an aspect ratio of 4 : 3, a 16 : 9 letterbox mode signal, or a 16 : 9 full mode signal having an aspect ratio of 16 : 9, and an identification information (34a) indicative of the modes of these signals, said video signal being intended to be supplied to said 16 : 9 television receiver, which has a function of automatically changing the scan size correspondingly to said input video signal being the 4 : 3 mode signal and the 16 : 9 full mode signal, respectively, said apparatus comprising:
• receiving means (31 ) for receiving the digitally transmitted signal;
• decode means (32,33) for decoding the signal (31a) received by said receiving means (31) and producing a reproduced analog color signal (ii) and a reproduced analog luminance signal (hh);
• detection means (34) for detecting the identification information (34a) from the signal received by said receiving means (31); and
• means (35 & 36) for superposing an analog discrimination information (35a) produced on the basis of said identification information (34a) on said reproduced analog color signal (ii) and outputting the superposed signal (jj), said superposing means (35 & 36) having a selector (35) outputting said discrimination information (35a), wherein said discrimination information is a d.c. voltage, and a d.c. voltage of a first range is assigned to the 16 : 9 full mode signal and a d.c. voltage of a second range below the first range is assigned to the 4 : 3 mode signal,
**characterized in that**
said selector is arranged and provided such that the range of voltage of discrimination information representing a 16 : 9 letterbox mode signal is assigned to the second range, and wherein the second range is divided into two subranges, one of the subranges being assigned to the 4 : 3 mode signal, and the other of the subranges being assigned to the 16 : 9 letterbox mode signal, said outputted discrimination information when representing a 16 : 9 letterbox mode signal is discriminated by said television receiver as a 4: 3 mode signal having an aspect ratio of 4 : 3.

## Patentansprüche

1. Eine Videosignalaufnahme- und Wiedergabevorrichtung zur Verwendung in Kombination mit einem 16:9 Fernsehempfänger mit einem Seitenverhältnis von 16:9, wobei die Videosignalaufnahme- und Wiedergabevorrichtung zur Aufnahme auf und Wiedergabe von einem Aufnahmemedium (T) eines Eingabevideosignals mit unterschiedlichen Modi einschließlich eines 4:3 Modussignal mit einem Seitenverhältnisses von 4:3, einem 16:9 Briefkasten- bzw. Letterboxmodusignal oder einem 16:9 Vollmodussignal mit einem Seitenverhältnis von 16:9 dient, wobei das wiedergegebene Videosignal an den 16:9 Fernsehempfänger geliefert werden soll, der eine Funktion besitzt automatisch die Abtastgröße in Abhängigkeit davon ob das Eingabevideosignal ein 3:4 Modussignal bzw. ein 16:9 Vollmodussignal ist zu ändern , wobei die Vorrichtung folgendes aufweist:
einen Codesteuerschaltkreis (2) für die Aufnahme einer Identifikationsinformation (2a, 9a), die anzeigend für den Modus des jeweiligen Eingabevideosignals auf dem Aufnahmemedium (T) ist;
einen Aufnahmesignalprozessor (1) für die Aufnahme des Eingabevideosignal (aa) auf dem Aufnahmemedium (T);
einen Wiedergabesignalprozessor (4) für die Erzeugung eines Luminanzsignals (cc) und eines Farbsignals (dd) aus dem Signal, das von dem Aufnahmemedium (T) wiedergegeben wird;
Codesteuerlesemittel (8, 9) für die Wiedergabe der Identifikationsinformation (9a) vom Aufnahmemedium (T); und ferner für die Überlagerung einer Unterscheidungsinformation (10a) auf das wiedergegebenen Farbsignal (dd), wobei die Codesteuerlesemittel (8, 9) eine Auswahlvorrichtung (10) besitzen, die die Unterscheidungsinformation (10a) entsprechend zur wiedergegebenen Identifikationsinformation ausgeben, wobei die Unterscheidungsinformation eine Gleichspannung ist und eine Gleichspannung in einem ersten Bereich dem 16:9 Vollmodussignal und eine Gleichspannung in einem zweiten Bereich, der unterhalb des ersten Bereichs liegt, dem 4:3 Modussignal zugeordnet ist
**dadurch gekennzeichnet, dass**
die Auswahlvorrichtung (10) derart angeordnet und vorgesehen ist, dass der Bereich der Spannung der Unterscheidungsinformation, die ein 16:9 Briefkastenmodussignal repräsentiert, dem zweiten Bereich zugewiesen ist und wobei der zweite Bereich in zwei Unterbereiche unterteilt ist, wobei einer der Unterbereiche dem 4:3 Modussignal und der anderer Teilbereich dem 16:9 Briefkastenmodussignal zugeordnet ist, wobei die Unterscheidungsinformation, die ein 16:9 Briefkastenmodussignal repräsentiert, durch den Fernsehempfänger als ein 4:3 Modussignal mit einem Seitenverhältnis von 4:3 unterschieden bzw. diskriminiert wird.

2. Eine Wiedergabevorrichtung zur Verwendung in Kombination mit einem 16:9 Fernsehempfänger mit einem Seitenverhältnis von 16:9, wobei die Wiedergabevorrichtung zur Wiedergabe eines Eingabevideosignals mit unterschiedlichen Modi einschließlich eines 4:3 Modussignal mit einem Seitenverhältnisses von 4:3, einem 16:9 Briefkasten- bzw. Letterboxmodusignal oder einem 16:9 Vollmodussignal mit einem Seitenverhältnis von 16:9 und von Identifikationsinformation (2a, 9a), die anzeigend ist für die Art des auf einem Aufnahmemedium (T) aufgenommene Videosignals dient, wobei das wiedergegebene Videosignal an den 16:9 Fernsehempfänger geliefert werden soll, der eine Funktion besitzt automatisch die Abtastgröße in Abhängigkeit davon ob das Eingabevideosignal ein 3:4 Modussignal bzw. ein 16:9 Vollmodussignal ist zu ändern , wobei die Vorrichtung folgendes aufweist:
Wiedergabesignalverarbeitungsmittel (4) für die Erzeugung eines Luminanzsignals (cc) und eines Farbsignals (dd) aus dem Signal, das von dem Aufnahmemedium (T) wiedergegeben wird;
Mittel (8, 9) für die Wiedergabe der Identifikationsinformation vom Aufnahmemedium (T); und
Mittel (7, 10, 41 & 42) für die Überlagerung einer Unterscheidungsinformation (10a), die erzeugt wird auf der Basis der wiedergegebenen Identifikationsinformation (2a, 9a), und zwar über das wiedergegebenen Farbsignal (dd), und für die Ausgabe des Überlagerungssignals (ff), wobei die Überlagerungsmittel (7, 10, 41 & 42) eine Auswahlvorrichtung (10) besitzen, die die Unterscheidungsinformation (10a) ausgibt, wobei die Unterscheidungsinformation eine Gleichspannung ist und eine Gleichspannung in einem ersten Bereich dem 16:9 Vollmodussignal und eine Gleichspannung in einem zweiten Bereich, der unterhalb des ersten Bereichs liegt, dem 4:3 Modussignal zugeordnet ist,
**dadurch gekennzeichnet, dass**
die Auswahlvorrichtung (10) derart angeordnet und vorgesehen ist, dass der Bereich der Spannung der Unterscheidungsinformation, die ein 16:9 Briefkastenmodussignal repräsentiert, dem zweiten Bereich zugewiesen ist und wobei der zweite Bereich in zwei Unterbereiche unterteilt ist, wobei einer der Unterbereiche dem 4:3 Modussignal und der anderer Teilbereich dem 16:9 Briefkastenmodussignal zugeordnet ist, wobei die durch die Auswahlvorrichtung (10) ausgegebene Unterscheidungsinformation (10a), die ein 16:9 Briefkastenmodussignal repräsentiert, durch den Fernsehempfänger als ein 4:3 Modussignal mit einem Seitenverhältnis von 4:3 unterschieden bzw. diskriminiert wird.

3. Videosignalempfangsvorrichtung zur Verwendung in Kombination mit einem 16:9 Fernsehempfänger mit einem Seitenverhältnis von 16:9 für den Empfang eines digital übertragenen Videosignals (kk) mit unterschiedlichen Modi einschließlich eines 4:3 Modussignal mit einem Seitenverhältnisses von 4:3, einem 16:9 Briefkasten- bzw. Letterboxmodusignal oder einem 16:9 Vollmodussignal mit einem Seitenverhältnis von 16:9, und von Identifikationsinformation (34a) anzeigend für die Modi dieser Signale, wobei das wiedergegebene Videosignal an den 16:9 Fernsehempfänger geliefert werden soll, der eine Funktion besitzt automatisch die Abtastgröße in Abhängigkeit davon ob das Eingabevideosignal ein 3:4 Modussignal bzw. ein 16:9 Vollmodussignal ist zu ändern , wobei die Vorrichtung folgendes aufweist:
Empfangsmittel (31) für den Empfang der digital übertragenen Signale;
Decodiermittel (32, 33) für die Decodierung des von den Empfangsmitteln (31) empfangenen Signals (31a) und für die Erzeugung eines wiedergegebenen bzw. reproduzierten Analogfarbsignals (ii) und eines wiedergegebenen Analogtuminanzsignals (hh);
Detektionsmittel (34) für das Detektieren der Identifikationsinformation (34a) aus dem von den Empfangsmitteln (31) empfangen Signal; und
Mittel (35 & 36) für die Überlagerung einer analogen Unterscheidungsinformation (35a), die auf der Basis der Identifikationsinformation (34a) erzeugt wird, und zwar über das wiedergegebene Analogfarbsignal (ii) und für die Ausgabe des Überlagerungssignals (jj), wobei die Überlagerungsmittel (35 & 36) eine Auswahlvorrichtung (35) besitzen, die die Unterscheidungsinformation (35a) ausgibt, wobei die Unterscheidungsinformation eine Gleichspannung ist und eine Gleichspannung in einem ersten Bereich dem 16:9 Vollmodussignal und eine Gleichspannung in einem zweiten Bereich, der unterhalb des ersten Bereichs liegt, dem 4:3 Modussignal zugeordnet ist,
**dadurch gekennzeichnet, dass**
die Auswahlvorrichtung (10) derart angeordnet und vorgesehen ist, dass der Bereich der Spannung der Unterscheidungsinformation, die ein 16:9 Briefkastenmodussignal repräsentiert, dem zweiten Bereich zugewiesen ist und wobei der zweite Bereich in zwei Unterbereiche unterteilt ist, wobei einer der Unterbereiche dem 4:3 Modussignal und der anderer Teilbereich dem 16:9 Briefkastenmodussignal zugeordnet ist, wobei die ausgegebene Unterscheidungsinformation, die ein 16:9 Briefkastenmodussignal repräsentiert, durch den Fernsehempfänger als ein 4:3 Modussignal mit einem Seitenverhältnis von 4:3 unterschieden bzw. diskriminiert wird.

## Revendications

1. Appareil d'enregistrement et de reproduction de signal vidéo destiné à être utilisé en combinaison avec un récepteur de télévision 16:9 ayant un format d'image de 16:9, ledit appareil d'enregistrement et de reproduction de signal vidéo destiné à enregistrer sur et reproduire depuis un support d'enregistrement (T) un signal vidéo d'entrée ayant différents modes incluant un signal de mode 4:3 ayant un format d'image de 4:3, un signal de mode letterbox 16:9, ou un signal de mode plein cadre 16:9 ayant un format d'image 16:9, ledit signal vidéo reproduit étant destiné à être délivré audit récepteur de télévision 16:9, dans lequel ledit récepteur de télévision 16:9 a une fonction de changement automatique de la dimension de balayage selon que ledit signal vidéo d'entrée est le signal de mode 4:3 et le signal de mode plein cadre 16:9, respectivement, ledit appareil comprenant :
- un circuit de commande de code (2) pour enregistrer une information d'identification (2a, 9a) indicative du mode du signal vidéo d'entrée, respectivement, sur le support d'enregistrement (T) ;
- un processeur de signal d'enregistrement (1) pour enregistrer le signal vidéo d'entrée (aa) sur le support d'enregistrement (T) ;
- un processeur de signal de reproduction (4) pour produire, à partir du signal reproduit depuis le support d'enregistrement (T), un signal de luminance (cc) et un signal de chrominance (dd) ;
- des moyens de lecture de commande de code (8, 9) pour reproduire l'information d'identification (9a) provenant du support d'enregistrement (T) ; et pour superposer une information de discrimination (10a) sur le signal de chrominance reproduit (dd), lesdits moyens de lecture de commande de code (8, 9) possédant un sélecteur (10) sortant ladite information de discrimination (10a) correspondant à ladite information d'identification reproduite, dans lesquels ladite information de discrimination est une tension continue (d.c.), et une tension continue d'une première gamme est assignée au signal de mode plein cadre 16:9 et une tension continue d'une deuxième gamme au-dessous de la première gamme est assignée au signal de mode 4:3,
**caractérisé en ce que** ledit sélecteur (10) est arrangé et fourni de telle sorte que la gamme de tension de l'information de discrimination représentant un signal de mode letterbox 16:9 est assignée à la deuxième gamme, et dans lequel la deuxième gamme est divisée en deux sous-gammes, l'une des sous-gammes étant assignée au signal de mode 4:3, et l'autre des sous-gammes étant assignée au signal de mode letterbox 16:9, dans lequel l'information de discrimination représentant un signal de mode letterbox 16:9 est discriminée par ledit récepteur de télévision en tant que signal de mode 4:3 ayant un format d'image de 4:3.

2. Appareil de reproduction destiné à être utilisé en combinaison avec un récepteur de télévision 16:9 ayant un format d'image de 16:9, ledit appareil de reproduction destiné à reproduire un signal vidéo d'entrée ayant différents modes incluant un signal de mode 4:3 ayant un format d'image de 4:3, un signal de mode letterbox 16:9, ou un signal de mode plein cadre 16:9 ayant un format d'image 16:9, et une information d'identification (2a, 9a) indicative du mode du signal vidéo enregistré sur un support d'enregistrement (T), ledit signal vidéo reproduit étant destiné à être délivré audit récepteur de télévision 16:9, qui a une fonction de changement automatique de la dimension de balayage selon que ledit signal vidéo d'entrée est le signal de mode 4:3 et le signal de mode plein cadre 16:9, respectivement, ledit appareil comprenant :
- des moyens de traitement de signal de reproduction (4) pour produire, à partir du signal reproduit depuis le support d'enregistrement (T), un signal de luminance (cc) et un signal de chrominance (dd) ;
- des moyens (8, 9) pour reproduire l'information d'identification provenant du support d'enregistrement (T) ; et
- des moyens (7, 10, 41 & 42) pour superposer une information de discrimination (10a), produite sur la base de ladite information d'identification reproduite (2a, 9a), sur le signal de chrominance reproduit (dd) et sortir le signal superposé (ff), lesdits moyens de superposition (7, 10, 41 & 42) possédant un sélecteur (10) sortant ladite information de discrimination (10a), dans lesquels ladite information de discrimination est une tension continue (d.c.), et une tension continue d'une première gamme est assignée au signal de mode plein cadre 16:9 et une tension continue d'une deuxième gamme au-dessous de la première gamme est assignée au signal de mode 4:3,
**caractérisé en ce que** ledit sélecteur (10) est arrangé et fourni de telle sorte que la gamme de tension de l'information de discrimination représentant un signal de mode letterbox 16:9 est assignée à la deuxième gamme, et dans lequel la deuxième gamme est divisée en deux sous-gammes, l'une des sous-gammes étant assignée au signal de mode 4:3, et l'autre des sous-gammes étant assignée au signal de mode letterbox 16:9, ladite information de discrimination (10a) sortie par ledit sélecteur (10) et représentant un signal de mode letterbox 16:9 est discriminée par ledit récepteur de télévision en tant que signal de mode 4:3 ayant un format d'image de 4:3.

3. Appareil de réception de signal vidéo destiné à être utilisé en combinaison avec un récepteur de télévision 16:9 ayant un format d'image de 16:9, ledit appareil de réception de signal vidéo destiné à recevoir un signal vidéo transmis numériquement (kk) ayant différents modes incluant un signal de mode 4:3 ayant un format d'image de 4:3, un signal de mode letterbox 16:9, ou un signal de mode plein cadre 16:9 ayant un format d'image 16:9, et une information d'identification (34a) indicative des modes de ces signaux, ledit signal vidéo étant destiné à être délivré audit récepteur de télévision 16:9, qui a une fonction de changement automatique de la dimension de balayage selon que ledit signal vidéo d'entrée est le signal de mode 4:3 et le signal de mode plein cadre 16:9, respectivement, ledit appareil comprenant :
- des moyens de réception (31) pour recevoir le signal transmis numériquement ;
- des moyens de décodage (32, 33) pour décoder le signal (31a) reçu par lesdits moyens de réception (31) et produire un signal analogique de chrominance reproduit (ii) et un signal analogique de luminance reproduit (hh) ;
- des moyens de détection (34) pour détecter l'information d'identification (34a) provenant desdits moyens de réception (31) ; et
- des moyens (35 & 36) pour superposer une information analogique de discrimination (35a), produite sur la base de ladite information d'identification (34a), sur ledit signal analogique de chrominance reproduit (ii) et sortir le signal superposé (jj), lesdits moyens de superposition (35 & 36) possédant un sélecteur (35) sortant ladite information de discrimination (35a), dans lesquels ladite information de discrimination est une tension continue (d.c.), et une tension continue d'une première gamme est assignée au signal de mode plein cadre 16:9 et une tension continue d'une deuxième gamme au-dessous de la première gamme est assignée au signal de mode 4:3,
**caractérisé en ce que** ledit sélecteur est arrangé et fourni de telle sorte que la gamme de tension de l'information de discrimination représentant un signal de mode letterbox 16:9 est assignée à la deuxième gamme, et dans lequel la deuxième gamme est divisée en deux sous-gammes, l'une des sous-gammes étant assignée au signal de mode 4:3, et l'autre des sous-gammes étant assignée au signal de mode letterbox 16:9, ladite information de discrimination sortie, lorsqu'elle représente un signal de mode letterbox 16:9, est discriminée par ledit récepteur de télévision en tant que signal de mode 4:3 ayant un format d'image de 4:3.
